# FASCICULE DE BREVET EUROPEEN

(11) **EP 2 691 272 B1**
(45) Date de publication et mention de la délivrance du brevet: **05.02.2020**
(21) Numéro de dépôt: 12710289.5
(22) Date de dépôt: 26.03.2012
(51) Int. Cl.: B60S 1/52, B60S 1/38

(54) **EMBOUT D'EXTREMITE A DISPOSITIF D'ACCROCHAGE D'UNE LAME D'ESSUYAGE**
ENDSTÜCK MIT EINER VORRICHTUNG ZUR SICHERUNG EINES WISCHBLATTS
END PIECE HAVING A DEVICE FOR SECURING A WIPER BLADE

(30) Priorité: 31.03.2011 FR 1152721
(43) Date de publication de la demande: 05.02.2014
(73) Titulaire: Valeo Systèmes d'Essuyage, 78322 Le Mesnil Saint Denis (FR)
(72) Inventeur: ESPINASSE, Philippe, F-63114 COUDES (FR)
(74) Mandataire: Callu-Danseux, Violaine
(86) Numéro de dépôt international: PCT/EP2012/055319
(87) Numéro de publication internationale: WO 2012/130797

(56) Documents cités:
- EP-A2- 2 127 969
- DE-A1-102006 027 439
- FR-A1- 2 920 729
- US-A1- 2008 016 643
- US-A1- 2008 289 134
- US-A1- 2010 071 148

## Description

Le domaine de la présente invention est celui des équipements pour l'essuyage des vitrages, notamment d'une automobile.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans les deux solutions, le balai est rattaché au bras tournant de l'essuie-glace par un connecteur.

Dans le cas où la qualité de l'essuyage se dégrade, il devient alors nécessaire de renouveler le moyen d'essuyage. Il existe deux solutions : la première consiste en un remplacement de l'intégralité du balai par un balai neuf alors que la deuxième solution consiste en un remplacement de la lame racleuse tout en conservant le reste du balai.

Le document US 2008/289134 A1 décrit un balai d'essuyage plat avec un embout d'extrémité démontable.

L'invention concerne plus particulièrement cette seconde solution qui impose le démontage d'une extrémité du balai pour accéder à la lame racleuse.

Pour réaliser la fixation de la lame racleuse avec le support constitutif du balai, ce dernier comporte un embout qui est monté à une extrémité de ce support et qui comporte des moyens pour assurer sa solidarisation vis-à-vis du support.

Par ailleurs, les essuie-glaces sont également équipés de dispositifs d'amenée d'un liquide lave-vitre qui est acheminé depuis un réservoir situé sur le véhicule et qui est pulvérisé en direction du pare-brise par des buses situées soit autour du pare-brise, soit sur l'essuie-glace lui-même pour une meilleure distribution du liquide.

L'inconvénient de cette seconde situation, dans le cas où seule la lame racleuse est remplacée, réside dans le fait que le dispositif d'amenée de liquide se trouve ouvert et provoque ainsi une fuite. Par ailleurs, l'ouverture du dispositif d'amenée de liquide pendant la phase de remplacement de la lame génère un risque de voir des impuretés entrer dans le dispositif. Une telle situation est problématique car ces impuretés obstruent les buses, dégradant ainsi nettement l'efficacité du lavage de pare-brise.

Un autre inconvénient d'une telle situation réside dans la difficulté de remplacer une telle lame racleuse. En effet, il convient de disposer de solution la plus ergonomique possible pour remplacer la lame et on comprend que la présence d'un liquide au niveau de zone de manipulation complique le remplacement de la lame et le bon remontage de celle-ci. Par ailleurs, la pression résiduelle à l'intérieur du dispositif d'amenée de liquide peut provoquer des projections de liquide sur l'utilisateur qu'il convient d'éviter.

Le but de la présente invention est donc de résoudre les inconvénients décrits ci-dessus principalement en obstruant le dispositif d'amenée de liquide tout en autorisant un démontage et un remontage aisés de la lame racleuse par rapport au support du balai d'essuyage, un ancrage de la lame intervenant pendant la phase où la partie primaire et la partie secondaire sont solidarisées.

L'invention a donc pour objet un embout d'extrémité d'un balai d'essuyage comportant au moins une lame d'essuyage, l'embout d'extrémité comprenant une partie primaire et une partie secondaire, la partie primaire et la partie secondaire sont reliées par un moyen de fixation amovible, l'embout d'extrémité comprend en outre un moyen de blocage apte à bloquer un mouvement de la lame d'essuyage par rapport à l'embout d'extrémité, le moyen de blocage comprenant un dispositif d'accrochage et un élément d'actionnement, ledit dispositif d'accrochage est agencé pour pincer la lame d'essuyage et soumis à un effort produit par l'élément d'actionnement, ledit dispositif d'accrochage comportant deux branches flexibles et configurées pour se rapprocher l'une de l'autre et exercer le pinçage de la lame lorsque l'élément d'actionnement vient en appui sur le dispositif d'accrochage.

Selon une première caractéristique de l'invention, le dispositif d'accrochage présente une face externe évasée alors que l'élément d'actionnement présente une face interne de forme complémentaire à la face externe du dispositif d'accrochage.

Selon une deuxième caractéristique de l'invention, le dispositif d'accrochage est formé par au moins une branche sur laquelle est ménagée au moins une dent apte à déformer la lame d'essuyage.

Selon une autre caractéristique de l'invention, le dispositif d'accrochage est formé par deux branches qui s'étendent dans des plans parallèles, les branches présentant chacune au moins une dent, ces dernières étant agencées de manière antagoniste.

Selon encore une caractéristique de l'invention, la face interne de l'élément d'actionnement comprend au moins un plot qui débouche de ladite face interne.

Selon encore une autre caractéristique de l'invention, la partie primaire comprend un évidement primaire apte à recevoir la lame d'essuyage.

Avantageusement, la partie secondaire comprend un évidement secondaire apte à recevoir la lame.

Avantageusement encore, le dispositif d'accrochage est ménagé sur la partie primaire alors que l'élément d'actionnement est ménagé sur la partie secondaire.

De manière alternative, le dispositif d'accrochage est ménagé sur la partie secondaire alors que l'élément d'actionnement est ménagé sur la partie primaire.

L'embout d'extrémité comprend au moins un moyen d'obturation apte à boucher un dispositif de canalisation d'un liquide constitutif du balai, ledit moyen d'obturation étant ménagé sur la partie primaire.

L'invention couvre aussi un balai d'essuyage comprenant au moins une lame d'essuyage et un embout d'extrémité selon l'une quelconque des caractéristiques présentées ci-dessus. Un tel balai d'essuyage pourra comprendre en outre au moins un dispositif de canalisation d'un liquide et une vertèbre.

Un tout premier avantage selon l'invention réside dans le fait que la partie secondaire peut-être extraite de la partie primaire sans la présence de liquide susceptible de compliquer cette extraction. Une telle extraction autorise alors un remplacement de la lame effectué en milieu sec, ce qui évite toute projection de liquide sur l'utilisateur au moment du montage et du démontage de la lame. Comme la partie primaire reste sur le balai d'essuyage, le dispositif d'amenée de liquide lave-vitre n'est pas ouvert, ce qui par conséquent empêche l'introduction d'impuretés dans les canalisations.

Un autre avantage réside dans le fait qu'un remplacement de la lame est particulièrement simple à effectuer puisqu'une seule et unique opération suffit pour libérer ou bloquer la lame racleuse par rapport au reste du balai. Une telle opération ne nécessite pas l'appui préalable sur un bouton, ou l'extraction d'une pièce intermédiaire, par exemple.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une première variante d'un embout selon l'invention installé à l'extrémité d'un balai d'essuyage,
- la figure 2 est une vue en perspective de la partie secondaire employée dans la première variante de l'invention,
- la figure 3 est une vue en perspective et de dessous de la partie secondaire employée dans la première variante de l'invention,
- la figure 4 est une vue en perspective de l'embout d'extrémité selon la première variante pendant la phase d'assemblage,
- la figure 5 est une vue de dessous de l'embout d'extrémité selon la première variante,
- la figure 6 est une vue de côté d'une extrémité d'un balai d'essuyage recevant l'embout d'extrémité selon la première variante,
- la figure 7 est une vue d'une partie primaire d'un embout d'extrémité selon une deuxième variante de l'invention,
- la figure 8 est une vue de dessous en perspective de la partie primaire de la figure 7,
- la figure 9 est une vue en perspective de l'embout d'extrémité selon la deuxième variante pendant la phase d'assemblage,
- la figure 10 est une vue en coupe et de dessous d'une extrémité d'un balai d'essuyage recevant l'embout d'extrémité selon la deuxième variante de l'invention.

Il faut noter que les figures exposent l'invention de manière détaillée pour mettre en œuvre l'invention, lesdites figures pouvant bien entendu servir à mieux définir l'invention le cas échéant.

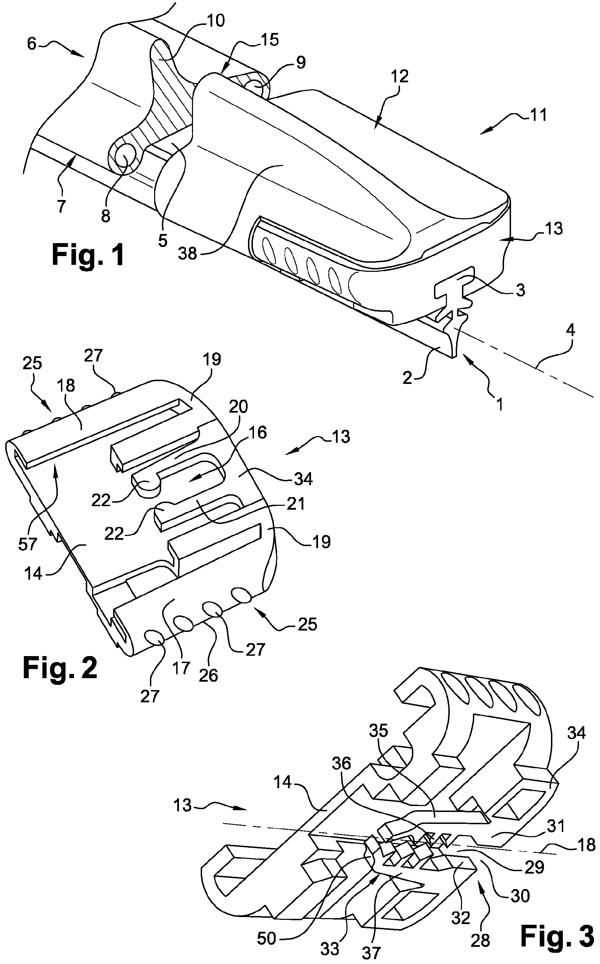

La figure 1 montre de manière partielle un balai d'essuyage équipant un système d'essuyage monté sur un véhicule automobile. Ce balai est installé sur le pare-brise avant mais il peut également être monté sur la vitre arrière du véhicule.

Le balai comprend une lame d'essuyage 1, autrement appelé lame racleuse, constituée d'une zone de frottement 2 sur le vitrage et d'un talon 3, qui assure la liaison mécanique avec un support constitutif du balai. Cette lame d'essuyage 1 s'étend sur la longueur selon un premier axe 4.

Le balai comprend par ailleurs une vertèbre 5 qui forme un dispositif de rigidification du balai. A titre d'exemple, il s'agit d'une baguette métallique unique qui s'étend dans sa longueur selon le premier axe 4 et qui présente au repos une courbure convexe par rapport au pare-brise. Cette baguette présente une flexibilité déterminée qui, en se déformant quand le balai est appliqué sur le pare-brise, provoque un effort réparti sur le long de la lame d'essuyage 1.

La lame d'essuyage 1 et la vertèbre 5 sont retenues par le support 6 qui forme alors une monture de support longitudinal couvrant la vertèbre 5 et la lame d'essuyage 1.

Le balai d'essuyage est pourvu d'un dispositif de canalisation d'un liquide 7 qui est rendu solidaire du support 6, par exemple par clippage, collage ou plus généralement par coopération de formes. Le dispositif de canalisation de liquide 7 peut également être réalisé de manière unitaire avec le support 6, comme cela est le cas de la figure 1. Le dispositif de canalisation du liquide 7 se présente notamment sous la forme d'au moins deux conduits 8 et 9 qui s'étendent longitudinalement le long du balai selon un axe, par exemple, parallèle au premier axe 4, et de part et d'autre de la lame d'essuyage 1. Plus précisément, ces conduits 8 et 9 sont disposés sur les côtés du support 6 et dans le prolongement du plan dans lequel s'étend le support 6. Ce dispositif de canalisation de liquide 7 est fabriqué à partir d'un matériau flexible, par exemple un caoutchouc ou un élastomère.

Le dispositif de canalisation du liquide 7 peut être formé conjointement avec un déflecteur d'air 10 dont la fonction est d'augmenter la force d'appui du balai sur le pare-brise au bénéfice de l'effet aérodynamique de l'air. Dans cet exemple de réalisation, le déflecteur d'air 10 et le dispositif de canalisation de liquide 7, particulièrement les deux conduits 8 et 9, sont moulés à partir d'un même matériau flexible tel qu'un caoutchouc ou un élastomère. Le déflecteur d'air 10 et le dispositif de canalisation de liquide 7 forment ainsi une seule et unique pièce.

A au moins une extrémité du balai est installé un embout d'extrémité 11. D'une manière générale, cet embout d'extrémité 11 assure une multiplicité de fonctions :
- il obstrue le dispositif de canalisation de liquide 7 du balai d'essuyage,
- il autorise le montage et le démontage de la lame d'essuyage 1 par rapport au support 6,
- il assure la solidarisation de la lame d'essuyage 1 vis-à-vis du support 6. Par solidarisation, il faut ici comprendre un moyen de bloquer toute translation de la lame d'essuyage 1 au regard du support 6. Ainsi, une fois que l'embout d'extrémité 11 est en place, tout mouvement de translation de la lame d'essuyage 1 est interdit, ce qui garantit une parfaite fixation de cette dernière par rapport au reste du balai.

L'embout d'extrémité 11 comprend une partie primaire 12 et une partie secondaire 13 reliées mécaniquement l'une à l'autre de manière amovible. On comprend ici que la partie primaire 12 est distincte et séparable de la partie secondaire 13, ces deux parties étant reliées l'une à l'autre par un moyen de fixation ménagé à la fois sur la partie primaire 12 et sur la partie secondaire 13.

La partie primaire 12 présente une section extérieure globalement complémentaire à la section extérieure du support 6, du dispositif de canalisation 7 et du déflecteur 10. Ainsi, ces trois composants pénètrent dans un volume interne 15 délimité par une paroi périphérique 38 constitutive de la partie primaire 12.

La partie primaire 12 présente une fonction de retenue de la lame d'essuyage 1, une fonction de retenue de la vertèbre 5 et une fonction d'obturation du dispositif de canalisation de liquide 7, alors que la partie secondaire 13 assure une fonction de retenue de la lame d'essuyage et une fonction de positionnement selon le premier axe 4 de cette lame d'essuyage 1.

La partie primaire 12 forme un capuchon qui, lorsque le balai d'essuyage est placé dans un plan horizontal, recouvre la partie secondaire 12. Autrement dit, cette partie primaire 12 est placée au dessus et dans le prolongement de la partie secondaire et présente une paroi périphérique 38 de forme conjuguée, autrement dit complémentaire, à la forme du support 6, y compris le moyen de canalisation de liquide 7 et/ou le déflecteur 10. La partie primaire 12 comprend ainsi une déformation dans laquelle se loge la partie secondaire 13.

La figure 2 montre la partie secondaire 13 vue de dessus, c'est-à-dire vue du côté qui fait directement face à la partie primaire. Cette partie secondaire 13 est formée par une paroi centrale 14 sur laquelle naît une première partie 57 du moyen de fixation amovible et dispositif d'accrochage 33 qui fait partie d'un moyen de blocage 28 de la lame d'essuyage. Ce dispositif d'accrochage 33 assure un ancrage de la lame qui limite son déplacement en translation.

La première partie 57 du moyen de fixation amovible est formée par une première gorge 17 et une seconde gorge 18 ménagées sur deux flancs de la paroi centrale 14. Ces gorges présentent une section en forme de « U » de sorte à réaliser une fonction de glissière ou de guidage vis-à-vis de la partie primaire. Ces deux gorges 17 et 18 comprennent une butée 19 réalisée par une paroi d'extrémité 34 de la partie secondaire 13.

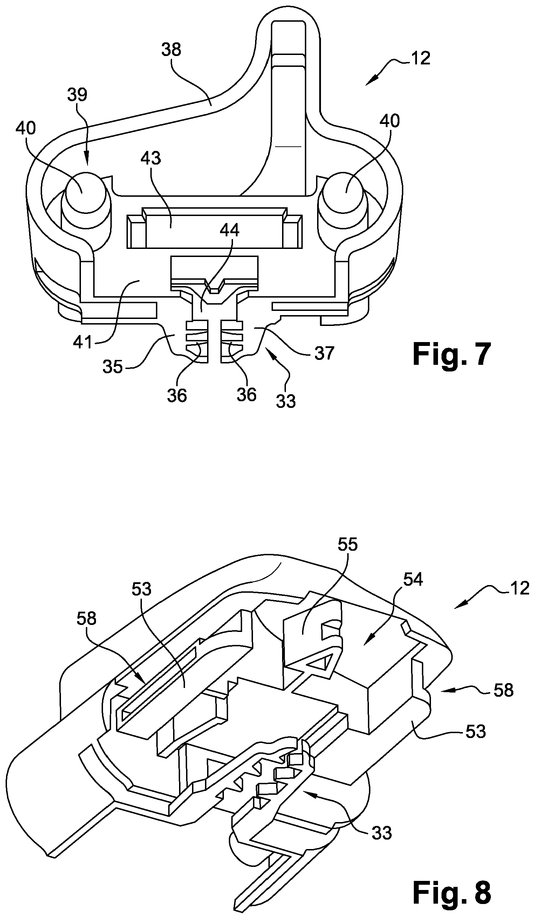

La partie secondaire 13 comprend également un dispositif de verrouillage 16 de la liaison réalisée entre la partie primaire et la partie secondaire 13. Ce dispositif de verrouillage 16 a pour fonction d'éviter toute translation non souhaitée entre la partie primaire et la partie secondaire 13. Ce moyen de verrouillage comprend ainsi deux bras flexibles 20 et 21 au bout desquelles est pratiqué un moyen de retenue 22 qui prend la forme d'un demi-cercle. Les deux bras 20 et 21 prennent naissance sur la paroi d'extrémité 34 et enserrent une tête (visible sur la figure 8) en forme de pointe de flèche formée sur la partie primaire. Cette tête comprend notamment deux pans obliques qui tendent à écarter l'un de l'autre les bras flexibles 20 et 21 lors de l'introduction de la partie secondaire 13 dans la partie primaire.

Lorsque la partie secondaire 13 est en position finale dans la partie primaire, les moyens de retenue 22 sont en appui contre des arêtes contigües aux pans obliques de la tête. Comme les bras 20 et 21 sont flexibles, le moyen de fixation entre la partie primaire et la partie secondaire est rendu amovible.

La partie secondaire 13 comprend aussi un dispositif de préhension 25 réalisé sur face externe de la partie secondaire. De manière plus précise, ce dispositif de préhension 25 est réalisé au moyen d'une pluralité de bossages 27 qui s'étendent parallèlement entre eux et selon une direction inclinée par rapport au plan de la paroi central 14.

La figure 3 montre la partie secondaire 13 en perspective et vue de dessous. Une telle perspective montre un dispositif d'accrochage 33 constitutif d'un moyen de blocage 28 destiné à interdire tout mouvement de la lame d'essuyage.

La partie secondaire 3 comprend un évidement secondaire 29 apte à recevoir la lame d'essuyage, cet évidement secondaire 29 s'étendant selon un axe longitudinal 18 parallèle au premier axe 4 selon lequel s'étend la lame d'essuyage 1.

L'évidement secondaire 29 reçoit le talon de la lame d'essuyage. Cet évidement secondaire 29 est formé par un enlèvement de matière au niveau de la paroi d'extrémité 34 de la partie secondaire 13 et présente une section complémentaire à la section du talon, par exemple rectangulaire. Un tel évidement secondaire 29 s'étend longitudinalement à l'opposé du moyen de verrouillage 16 par rapport à la paroi centrale 14. La paroi d'extrémité comprend encore une saignée 30 alignée avec l'évidement secondaire 29 et qui ouvre ce dernier vers le milieu environnant la partie secondaire 13. Une telle saignée 30, de largeur inférieure à la largeur de l'évidement secondaire 29 mesurée selon un axe transversal perpendiculaire à l'axe longitudinal 18, autorise le passage du talon. Cette saignée 30 est bordée par une première tranche 31 et une seconde tranche 32, ces dernières servant de coulisseau pour l'extraction ou l'insertion de la lame d'essuyage.

Le moyen de blocage 28 est constitué principalement de deux sous-ensembles : un dispositif d'accrochage 33 et un élément d'actionnement 51. Selon cette première variante de l'embout d'extrémité selon l'invention, le dispositif d'accrochage 33 est issu de la partie secondaire alors que l'élément d'actionnement est ménagé sur la partie primaire. On comprend ainsi que le dispositif d'accrochage 33 est moulé simultanément avec la partie secondaire 13 alors que l'élément d'actionnement 51 est moulé simultanément avec la partie primaire 12. Ces moulages sont réalisés à partir d'une matière plastique.

Le dispositif d'accrochage 33 prend naissance sur la paroi d'extrémité 34 et s'étend selon une direction globalement parallèle à l'axe longitudinal 18. Le dispositif d'accrochage 33 est formé par au moins une branche 35 sur laquelle est ménagée au moins une dent 36. De manière avantageuse, le dispositif d'accrochage comprend deux branches référencées 35 et 37 chacune munie d'une pluralité de dents 36. Ces deux branches 35 et 37 s'étendent dans un même plan, avantageusement parallèle à un plan dans lequel s'étend la paroi centrale 14. Dans une telle situation, les deux branches 35 et 37 sont agencées de manière à ce que leurs dents respectives soient les unes en face des autres. Autrement dit, au moins une dent d'une branche est installée en face d'une dent de l'autre branche, de manière antagoniste.

Alternativement, l'invention prévoit qu'au moins une dent d'une branche soit décalée par rapport à la dent immédiatement adjacente de l'autre branche. Une telle disposition permet à chaque dent de pénétrer plus profondément dans le matériau constitutif de la lame d'essuyage, sans venir au contact de la dent antagoniste.

Cette figure 3 montre également une face externe 50 du dispositif d'accrochage 33, le qualificatif « externe » signifiant que la paroi en question est à une périphérie tournée vers l'extérieur du composant délimité par la face.

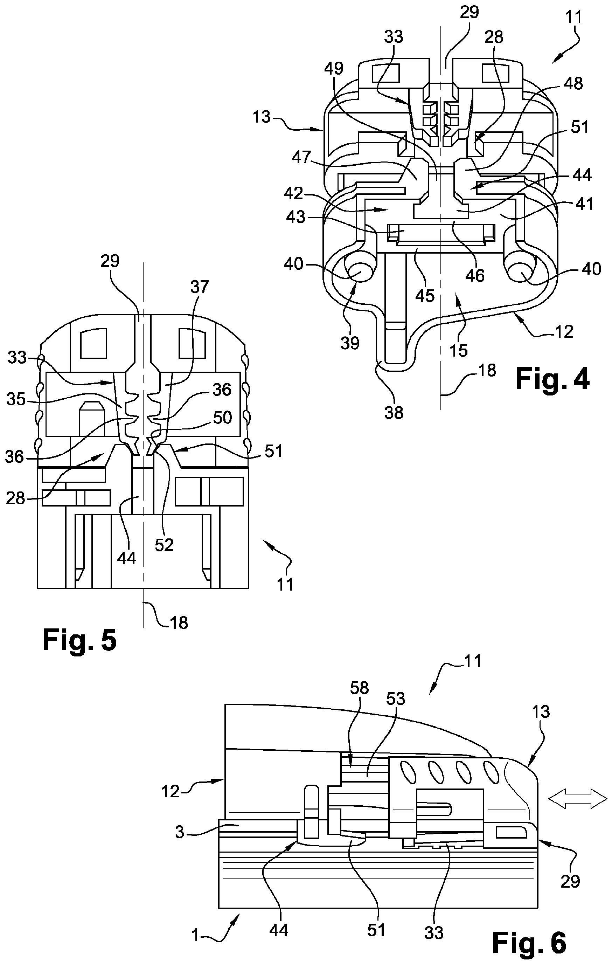

La figure 4 montre l'embout d'extrémité 11 constitué de sa partie primaire 12 et de sa partie secondaire 13 pendant la phase de guidage et avant le verrouillage par le moyen de verrouillage détaillé ci-dessus.

Le volume interne 15 est ici particulièrement visible. Un exemple de réalisation d'un moyen d'obturation 39 est représenté sur cette figure, disposé à l'intérieur de ce volume interne. Ce moyen d'obturation 39 a pour fonction de boucher, ou fermer, le dispositif de canalisation du fluide du balai d'essuyage. Pour ce faire, la partie secondaire 13 comprend au moins un téton 40 agencé pour faire face au conduit. Ce téton 40 est une excroissance tubulaire qui s'étend selon un axe parallèle à l'axe longitudinal 18 et confondu avec un axe dans lequel s'étend le conduit concerné. Le diamètre extérieur de ce téton 40 est légèrement supérieur au diamètre intérieur du conduit respectif. Comme le matériau constitutif des conduits est flexible, ce dernier se déforme pour s'emmancher sur le téton 40 et ainsi garantir une étanchéité au liquide. On notera enfin que l'extrémité libre du téton 40 présente un chanfrein qui facilite l'introduction du téton dans le conduit.

Le moyen d'obturation 39 peut prendre d'autres formes de réalisation pour autant qu'il assure l'étanchéité du dispositif de canalisation du liquide aux extrémités du balai. A titre d'exemple, le dispositif d'obturation peut être formé par un appui plan du bout des conduites 8 ou 9 directement contre un flanc 41 qui borde un corps 42 constitutif de la partie primaire 12.

La partie primaire 12 comprend un logement 43 apte à recevoir la vertèbre et un évidement primaire 44 apte à recevoir la lame d'essuyage, cet évidement primaire 44 s'étendant selon l'axe longitudinal 18. Autrement dit, l'évidement primaire 44 réalisé dans la partie primaire 12 est situé dans le prolongement de l'évidement secondaire 29 réalisé dans la partie secondaire 13.

Le logement 43 est formé dans le corps 42 constitutif de la partie primaire 12. Ce logement 43 correspond à un enlèvement de matière de forme rectangulaire et qui s'étend selon l'axe longitudinal 18. La forme de ce logement 43 est complémentaire d'une section transversale de la vertèbre. Ce logement 43 est ainsi délimité d'un côté par une paroi supérieure 45 constitutive du corps 42, et de l'autre par une paroi intermédiaire 46, cette dernière étant interposée entre le logement 43 et l'évidement primaire 44.

Les deux tétons 40 s'étendent dans un plan parallèle au plan de la paroi supérieur 45. La paroi périphérique 38 délimite le volume interne 15 et entoure sur au moins 180° les tétons 40.

L'évidement primaire 44 est bordé par une première arête 47 et par une deuxième arête 48 écartées l'une de l'autre afin de délimiter une fente 49 dans laquelle coulisse la lame d'essuyage.

La figure 5 montre la coopération entre l'élément d'actionnement 51 et le dispositif d'accrochage 33. En pratique, l'élément d'actionnement 51 est réalisé par un prolongement de la première arête 47 et/ou de la deuxième arête 48.

La face externe 50 du dispositif d'accrochage 33 est formée par une arête réalisée à l'extrémité de chacune des branches 35 et 37. Il existe ainsi deux faces externes 50 dont les plans s'étendent chacun selon une direction concourante en un point situé sur l'axe longitudinal 18.

L'élément d'actionnement 51 comprend également une face interne 52 de forme complémentaire, autrement dit conjuguée, avec la forme évasée de la face externe 50 du dispositif d'accrochage 33. Pour ce faire, les prolongements formant l'élément d'actionnement 51 présentent un chanfrein formant deux plats qui s'étendent dans deux directions concourantes en un point sur l'axe longitudinal 18.

Les branches 35 et 37 du dispositif d'accrochage sont flexibles. En effet, le fait que ces branches débouchent de la paroi d'extrémité 34 leurs donnent la faculté de se déplacer l'une en direction de l'autre. Quand l'élément d'actionnement 51 vient en appui sur la face externe 50 du dispositif d'accrochage 33, la face interne 52 exerce un effort qui rapproche les deux branches 35 et 37. Une telle disposition permet aux dents 36 de chaque branche de pincer la lame d'essuyage, les dents 36 étant réalisées en une matière plastique plus rigide que la lame d'essuyage ce qui leur permet de s'ancrer dans le matériau constitutif de la lame d'essuyage 1. On empêche ainsi tout mouvement de translation de la lame vis-à-vis de l'embout d'extrémité 11. Un tel pincement intervient simultanément à la solidarisation entre la partie primaire 12 et la partie secondaire 13 à l'aide du moyen de fixation amovible.

La figure 6 illustre la manipulation de la partie secondaire 13 par rapport à la partie primaire 12. Cette dernière comprend une deuxième partie 58 constitutive du moyen de fixation et ménagée sur la partie primaire 12.

Cette deuxième partie 58 du moyen de fixation amovible comprend deux rainures 53 formées de chaque côté de la partie primaire 12. Ces rainures 53 s'étendent dans un plan parallèle à une face supérieure du talon 3 de la lame d'essuyage 1 et autorisent un coulissement de la partie secondaire 13 dans la partie primaire 12. De manière plus détaillée, les rainures 53 glissent dans les gorges pratiquées dans la partie secondaire.

Quand la partie secondaire 13 est extraite de la partie primaire 12, la lame d'essuyage 1 peut coulisser librement dans l'évidement primaire 44 et dans l'évidement secondaire 29. Une fois que la lame d'essuyage 1 est en place, la partie secondaire 13 est amenée en position finale où l'élément d'actionnement 51 vient exercer un effort sur le dispositif d'accrochage 33, en réalisant un appui antagoniste sur les deux branches 35 et 37.

Le dispositif d'accrochage 33 est alors soumis à un effort mécanique par l'élément d'actionnement 51, le caractère conique des faces internes 52 venant faire appui sur les branches 35 et 37 au niveau de leurs faces externes 50. Il s'ensuit une déformation de ces branches 35 et 37 et un pincement de la lame d'essuyage 1 par les dents 36.

Les figures 7 à 10 illustrent une deuxième variante de réalisation de l'embout d'extrémité selon l'invention.

Contrairement à la première variante, le dispositif d'accrochage 33 est issu de la partie primaire 12. De même, l'élément d'actionnement est ménagé sur la partie secondaire. On comprend ainsi que le dispositif d'accrochage 33 est moulé simultanément avec la partie primaire 12 alors que l'élément d'actionnement 51 est moulé simultanément avec la partie secondaire 12. Ces moulages sont réalisés à partir d'une matière plastique.

La figure 7 montre la partie primaire 12. La description qui suit s'attache à expliciter les différences avec la partie primaire de la première variante. On se reportera à la description ci-dessus pour connaître la structure des éléments identiques comme, par exemple, la paroi périphérique 38, le moyen d'obturation 39, le logement 43 et l'évidement primaire 44.

Le dispositif d'accrochage 33 prend naissance sur le flanc 41. La constitution de ce dispositif d'accrochage 33 est identique à celle décrite en rapport avec la première variante. Les branches 35 et 37 sont pourvues de dents 36 entre lesquelles est ménagée une saignée 30 où la lame d'essuyage est destinée à s'installer. Ces branches s'étendent dans un sens opposé au sens d'extension des tétons 40 formant le moyen d'obturation 39. Autrement dit, le flanc 41 est intercalé entre ce moyen d'obturation 39 et le dispositif d'accrochage 33.

La figure 8 montre une vue de dessous de la partie primaire 12 employée dans la deuxième variante de l'embout d'extrémité. Cette figure montre la structure de la partie primaire 12 au droit de la déformation qui reçoit la partie secondaire. Les deux rainures 53, formant la deuxième partie 58 du moyen de fixation amovible, sont ici apparentes et on constate que leur section prend une forme en « L ». Dans une cavité 54 formée à l'extrémité de la partie primaire 12, on trouve la tête 55 destinée à coopérer avec le moyen de verrouillage, par exemple identique à celui détaillé à la figure 2.

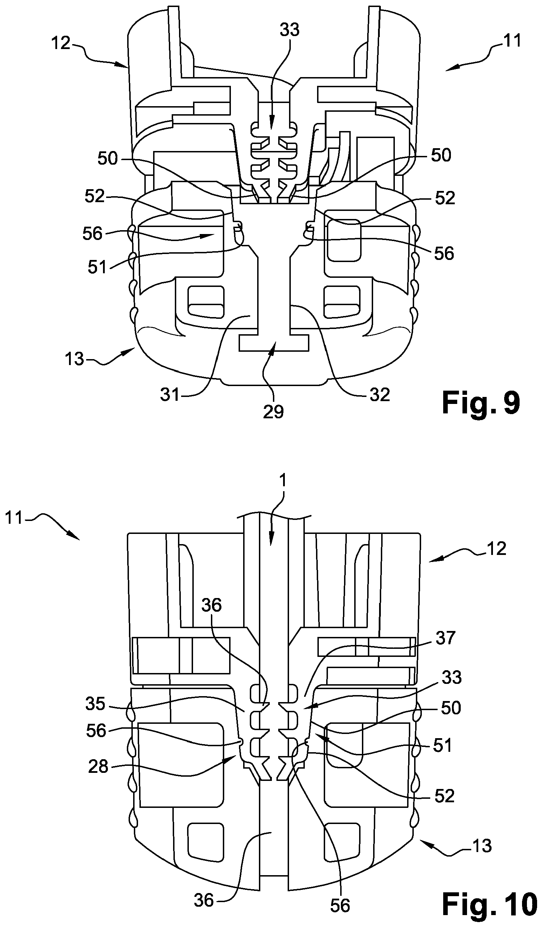

La figure 9 montre l'embout d'extrémité 11 pendant la phase de guidage de la partie secondaire 13 dans la déformation de la partie primaire 12.

La structure de la partie secondaire est proche de celle décrite en rapport avec la première variante de l'embout d'extrémité et on se reportera à la description de celle-ci pour connaître la structure des éléments identiques. La description ci-dessous se limite donc à la description des différences.

L'élément d'actionnement 51 est réalisé sur la partie secondaire 13. De manière plus précise, cet élément d'actionnement 51 est réalisé par un prolongement de la première tranche 31 et de la deuxième tranche 32, ces dernières délimitant l'évidement secondaire 29.

Ces prolongements sont chacun pourvu de la face interne 52 qui présente une forme complémentaire à la face externe 50 ménagée sur la partie primaire 12. Ainsi, ces deux faces internes 50 et ces deux faces externes 52 sont agencées de sorte à former par couple une extension conique. Autrement dit, les deux faces externes 50 réalisées sur les branches 35 et 37 et les deux faces internes 52 des prolongements s'inscrivent dans des cônes concentriques.

De manière avantageuse, chaque face interne 52 comprend au moins un plot 56 qui débouche de la face interne 52 au niveau de l'évidement secondaire 29. Ces deux plots 56 sont ainsi par exemple installés face-à-face. Chacun de ces plots est formé par une excroissance de la matière plastique constitutive la partie secondaire 13.

La figure 10 montre l'embout d'extrémité selon la deuxième variante où la partie secondaire 13 est en position de blocage de la lame d'essuyage 1 vis-à-vis de la partie primaire 12.

Le dispositif d'accrochage 33 est alors soumis à un effort mécanique par l'élément d'actionnement 51, le caractère conique des faces internes 52 venant faire appui sur les branches 35 et 37 au niveau de leurs faces externes 50. Il s'ensuit une déformation de ces branches 35 et 37 et un pincement de la lame d'essuyage 1 par les dents 36. Les plots 56 viennent augmenter l'effort exercé par le dispositif d'accrochage 33 sur la lame d'essuyage 1.

Le remplacement d'une lame d'essuyage 1 d'un balai d'essuyage comprenant au moins un embout d'extrémité 11 illustré aux figures précédemment détaillées intervient de la manière suivante :
- Extraction de la partie secondaire 13 par rapport à la partie primaire 12 par une traction sur la partie secondaire 13 dans une direction parallèle à un premier axe 4 dans lequel s'étend longitudinalement la lame d'essuyage 1,
- Retrait par un mouvement de translation de la lame d'essuyage 1 à remplacer, la partie primaire 12 restant solidaire du balai d'essuyage,
- Insertion d'une nouvelle lame d'essuyage 1 par un mouvement de translation en l'enfilant dans l'évidement primaire 44 de la partie primaire 12,
- Alignement de la lame d'essuyage 1 sur une extrémité de la partie primaire 12,
- Montage de la partie secondaire 13 sur la partie primaire 12 à l'aide d'un moyen de fixation amovible,
- Blocage de la lame d'essuyage simultanément à un verrouillage de la partie secondaire 13 sur la partie primaire 12.

## Revendications

1. Embout d'extrémité (11) d'un balai d'essuyage comportant au moins une lame d'essuyage (1), l'embout d'extrémité (11) comprenant une partie primaire (12) et une partie secondaire (13), la partie primaire (12) et la partie secondaire (13) sont reliées par un moyen de fixation amovible, l'embout d'extrémité (11) comprend en outre un moyen de blocage (28) apte à bloquer un mouvement de la lame d'essuyage (1) par rapport à l'embout d'extrémité (11), le moyen de blocage (28) comprenant un dispositif d'accrochage (33) et un élément d'actionnement (51), ledit dispositif d'accrochage (33) est agencé pour pincer la lame d'essuyage (1) et soumis à un effort produit par l'élément d'actionnement (51), ledit dispositif d'accrochage (33) comportant deux branches (35, 37) flexibles et configurées pour se rapprocher l'une de l'autre et exercer le pinçage de la lame lorsque l'élément d'actionnement (51) vient en appui sur le dispositif d'accrochage (33).

2. Embout d'extrémité selon la revendication 1, dans lequel le dispositif d'accrochage (33) présente une face externe (50) évasée alors que l'élément d'actionnement (51) présente une face interne (52) de forme complémentaire à la face externe (50) du dispositif d'accrochage (33).

3. Embout d'extrémité selon l'une quelconque des revendications précédentes, dans lequel le dispositif d'accrochage (33) est formé par au moins une branche (35, 37) sur laquelle est ménagée au moins une dent (36) apte à déformer la lame d'essuyage (1).

4. Embout d'extrémité selon la revendication 3, dans lequel le dispositif d'accrochage (33) est formé par deux branches (35, 37) qui s'étendent dans des plans parallèles, les branches (35, 37) présentant chacune au moins une dent (36), ces dernières étant agencées de manière antagoniste.

5. Embout d'extrémité selon la revendication 2, dans lequel la face interne (52) de l'élément d'actionnement (51) comprend au moins un plot (56) qui débouche de ladite face interne (52).

6. Embout d'extrémité selon l'une quelconque des revendications précédentes, dans lequel la partie primaire (12) comprend un évidement primaire (44) apte à recevoir la lame d'essuyage (1).

7. Embout d'extrémité selon l'une quelconque des revendications précédentes, dans lequel la partie secondaire (13) comprend un évidement secondaire (29) apte à recevoir la lame d'essuyage (1).

8. Embout d'extrémité selon l'une quelconque des revendications précédentes, dans lequel le dispositif d'accrochage (33) est ménagé sur la partie primaire (12) alors que l'élément d'actionnement (51) est ménagé sur la partie secondaire (13).

9. Embout d'extrémité selon l'une quelconque des revendications 1 à 7, dans lequel le dispositif d'accrochage (33) est ménagé sur la partie secondaire (13) alors que l'élément d'actionnement (51) est ménagé sur la partie primaire (12).

10. Embout d'extrémité selon l'une quelconque des revendications précédentes, dans lequel est prévu au moins un moyen d'obturation (39) apte à boucher un dispositif de canalisation (7) d'un liquide constitutif du balai d'essuyage, ledit moyen d'obturation (39) étant ménagé sur la partie primaire (12).

11. Balai d'essuyage comprenant au moins une lame d'essuyage (1) et un embout d'extrémité (11) selon l'une quelconque des revendications précédentes.

12. Balai d'essuyage selon la revendication 11, comprenant en outre au moins un dispositif de canalisation (7) d'un liquide et une vertèbre (5), ladite vertèbre et la lame d'essuyage (1) étant retenues par un support longitudinal (6) couvrant la vertèbre (5) et la lame d'essuyage (1), l'embout étant agencé pour autoriser le montage et le démontage de la lame d'essuyage (1) par rapport au support (6).

## Patentansprüche

1. Endstück (11) eines Scheibenwischers, der mindestens ein Wischblatt (1) umfasst, wobei das Endstück (11) einen Primärteil (12) und einen Sekundärteil (13) beinhaltet, wobei der Primärteil (12) und der Sekundärteil (13) durch ein abnehmbares Befestigungsmittel verbunden sind, wobei das Endstück (11) ferner ein Blockierungsmittel (28) beinhaltet, das fähig ist, eine Bewegung des Wischblatts (1) mit Bezug auf das Endstück (11) zu blockieren, wobei das Blockierungsmittel (28) eine Sicherungsvorrichtung (33) und ein Betätigungselement (51) beinhaltet, wobei die Sicherungsvorrichtung (33) so angeordnet ist, dass sie das Wischblatt (1) klemmt, und einer von dem Betätigungselement (51) erzeugten Kraft ausgesetzt ist, wobei die Sicherungsvorrichtung (33) zwei flexible Arme (35, 37) beinhaltet, die dazu konfiguriert sind, sich einander anzunähern und das Klemmen des Blatts auszuführen, wenn das Betätigungselement (51) an der Sicherungsvorrichtung (33) zur Anlage kommt.

2. Endstück nach Anspruch 1, wobei die Sicherungsvorrichtung (33) eine aufgeweitete Außenfläche (50) aufweist, während das Betätigungselement (51) eine Innenfläche (52) aufweist, deren Form zu der Außenfläche (50) der Sicherungsvorrichtung (33) komplementär ist.

3. Endstück nach einem der vorhergehenden Ansprüche, wobei die Sicherungsvorrichtung (33) durch mindestens einen Arm (35, 37) gebildet ist, an dem mindestens ein Zahn (36) bereitgestellt ist, der fähig ist, das Wischblatt (1) zu verformen.

4. Endstück nach Anspruch 3, wobei die Sicherungsvorrichtung (33) durch zwei Arme (35, 37) gebildet ist, die sich in parallelen Ebenen erstrecken, wobei die Arme (35, 37) jeweils mindestens einen Zahn (36) aufweisen, wobei diese letzteren einander entgegengerichtet angeordnet sind.

5. Endstück nach Anspruch 2, wobei die Innenfläche (52) des Betätigungselements (51) mindestens eine Nase (56) aufweist, die an der Innenfläche (52) entspringt.

6. Endstück nach einem der vorhergehenden Ansprüche, wobei der Primärteil (12) eine Primäraussparung (44) beinhaltet, die fähig ist, das Wischblatt (1) aufzunehmen.

7. Endstück nach einem der vorhergehenden Ansprüche, wobei der Sekundärteil (13) eine Sekundäraussparung (29) beinhaltet, die fähig ist, das Wischblatt (1) aufzunehmen.

8. Endstück nach einem der vorhergehenden Ansprüche, wobei die Sicherungsvorrichtung (33) an dem Primärteil (12) bereitgestellt ist, während das Betätigungselement (51) an dem Sekundärteil (13) bereitgestellt ist.

9. Endstück nach einem der Ansprüche 1 bis 7, wobei die Sicherungsvorrichtung (33) an dem Sekundärteil (13) bereitgestellt ist, während das Betätigungselement (51) an dem Primärteil (12) bereitgestellt ist.

10. Endstück nach einem der vorhergehenden Ansprüche, an dem mindestens ein Abdichtungsmittel (39) vorgesehen ist, das fähig ist, eine Vorrichtung (7) zum Leiten einer Flüssigkeit, die Teil des Scheibenwischers ist, zu verschließen, wobei das Abdichtungsmittel (39) an dem Primärteil (12) bereitgestellt ist.

11. Scheibenwischer, der mindestens ein Wischblatt (1) und ein Endstück (11) nach einem der vorhergehenden Ansprüche beinhaltet.

12. Scheibenwischer nach Anspruch 11, der ferner mindestens eine Vorrichtung (7) zum Leiten einer Flüssigkeit und eine Leiste (5) beinhaltet, wobei die Leiste und das Wischblatt (1) durch einen Längsträger (6) gehalten werden, der die Leiste (5) und das Wischblatt (1) abdeckt, wobei das Stück so angeordnet ist, dass es die Montage und die Demontage des Wischblatts (1) mit Bezug auf den Träger (6) gestattet.

## Claims

1. An end fitting (11) of a wiper having at least one wiper blade (1), the end fitting (11) comprising a primary part (12) and a secondary part (13), the primary part (12) and the secondary part (13) being connected by a removable fastening means, the end fitting (11) also comprising an immobilizing means (28) that is able to prevent a movement of the wiper blade (1) with respect to the end fitting (11), the immobilizing means (28) comprising a coupling device (33) and an actuating element (51), said coupling device (33) being designed to pinch the wiper blade (1) and being subjected to a force produced by the actuating element (51), the coupling device (33) comprising two flexible branches (35, 37) being able to move toward one another and to pinch the wiper blade (1) when the actuating element (51) comes into abutment against the coupling device (33).

2. The end fitting as claimed in claim 1, wherein the coupling device (33) has a flared outer face (50) while the actuating element (51) has an inner face (52) having a shape complementary to the outer face (50) of the coupling device (33).

3. The end fitting as claimed in either of the preceding claims, wherein the coupling device (33) is formed by at least one branch (35, 37) on which there is formed at least one tooth (36) that is able to deform the wiper blade (1).

4. The end fitting as claimed in claim 3, wherein the coupling device (33) is formed by two branches (35, 37) which extend in parallel planes, the branches (35, 37) each having at least one tooth (36), the latter being arranged in an antagonistic manner.

5. The end fitting as claimed in claim 2, wherein the inner face (52) of the actuating element (51) comprises at least one protrusion (56) which emerges from said inner face (52).

6. The end fitting as claimed in any one of the preceding claims, wherein the primary part (12) comprises a primary recess (44) that is able to receive the wiper blade (1).

7. The end fitting as claimed in any one of the preceding claims, wherein the secondary part (13) comprises a secondary recess (29) that is able to receive the wiper blade (1).

8. The end fitting as claimed in any one of the preceding claims, wherein the coupling device (33) is formed on the primary part (12) while the actuating element (51) is formed on the secondary part (13).

9. The end fitting as claimed in any one of claims 1 to 7, wherein the coupling device (33) is formed on the secondary part (13) while the actuating element (51) is formed on the primary part (12).

10. The end fitting as claimed in any one of the preceding claims, wherein at least one blocking means (39) that is able to plug a constituent liquid channeling device (7) of the wiper is provided, said blocking means (39) being formed on the primary part (12).

11. A wiper comprising at least one wiper blade (1) and an end fitting (11) as claimed in any one of the preceding claims.

12. The wiper as claimed in claim 11, furthermore comprising at least one liquid channeling device (7) and a vertebra (5), said vertebra and the wiper blade (1) being held by a longitudinal support (6) covering the vertebra (5) and the wiper blade (1), the end fitting being arranged so that to allow the mounting and the dismounting of the wiper blade (1) with respect to the support (6).
